# EUROPEAN PATENT APPLICATION

(11) **EP 3 819 973 A2**
(43) Date of publication of application: **12.05.2021**
(21) Application number: 20206723.7
(22) Date of filing: 10.11.2020
(51) Int. Cl.: H01M 10/052, H01M 10/0562, H01M 10/0585, H01M 4/133, H01M 4/134, H01M 4/38, H01M 4/583

(54) **ALL-SOLID-STATE SECONDARY BATTERY**

(30) Priority: 11.11.2019 KR 20190143656
(71) Applicant: Samsung SDI Co., Ltd., Yongin-si, Gyeonggi-do 17084 (KR)
(72) Inventor: LEE, Minsuk, 17084 Gyeonggi-do (KR); RYU, Younggyoon, 17084 Gyeonggi-do (KR)
(74) Representative: Walaski, Jan Filip

(57) **Abstract**

An all-solid-state secondary battery includes a cathode layer; an anode layer; and a solid electrolyte layer disposed between the cathode layer and the anode layer, wherein the cathode layer comprises a cathode current collector, a cathode active material layer disposed on the cathode current collector, and an inactive member disposed on at least one side surface of the cathode active material layer, wherein the anode layer comprises an anode current collector and a first anode active material layer disposed on the anode current collector.

## Description

This application claims priority to Korean Patent Application No. 10-2019-0143656, filed on November 11, 2019, in the Korean Intellectual Property Office.

### BACKGROUND

### 1. Field

One or more aspects of the present disclosure relate to an all-solid-state secondary battery.

### 2. Description of Related Art

Recently, in accordance with industrial demand, batteries having high energy density and high safety are being actively developed. For example, lithium-ion batteries have been put to practical use in the automotive field as well as in information-related equipment and communication equipment. In the field of automobiles, safety is particularly important because it relates to life.

Currently available lithium-ion batteries use an electrolytic solution including a flammable organic solvent, and thus, when a short-circuit occurs, there is a possibility of overheating and/or the occurrence of a fire. In this regard, an all-solid-state secondary battery using a solid electrolyte instead of an electrolytic solution has been proposed, which is also referred to as a solid-state battery or an all-solid secondary battery.

In the all-solid-state secondary battery, a flammable organic solvent is not used, and thus the possibility of a fire or an explosion even when a short-circuit occurs should be reduced. Therefore, such an all-solid secondary battery should have greatly increased safety, compared to a lithium-ion battery using an electrolyte.

### SUMMARY

One or more aspects of embodiments of the present disclosure are directed toward an all-solid-state secondary battery having a novel structure.

Additional aspects will be set forth in part in the description which follows and, in part, will be apparent from the description, or may be learned by practice of the presented embodiments of the disclosure.

One or more example embodiments of the present disclosure provide an all-solid-state secondary battery including a cathode layer; an anode layer; and a solid electrolyte layer disposed between the cathode layer and the anode layer, wherein the cathode layer includes a cathode current collector, a cathode active material layer disposed on the cathode current collector, and an inactive member disposed on one (e.g., one or more) side surface of the cathode active material layer, wherein the anode layer includes an anode current collector and a first anode active material layer disposed on the anode current collector.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional schematic view of an all-solid secondary battery according to an example embodiment;
FIG. 2 is a cross-sectional schematic view of an all-solid secondary battery according to another example embodiment;
FIG. 3 is a perspective schematic view of a cathode layer of the all-solid secondary battery according to an example embodiment; and
FIG. 4 is a schematic view that shows a part of an inside of the all-solid secondary battery according to an example embodiment.

### DETAILED DESCRIPTION

Reference will now be made in detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. As used herein, the term "and/or" includes any and all combinations of one or more of the associated listed items. Expressions such as "at least one of," "one of," and "selected from," when preceding a list of elements, modify the entire list of elements and do not modify the individual elements of the list.

Because an all-solid secondary battery has a solid electrolyte, resistance in the battery may increase when a contact between a cathode layer and a solid electrolyte layer and/or between an anode layer and the solid electrolyte layer is not sufficiently maintained (e.g., insufficient), thus making it difficult to realize a battery with desired or excellent battery characteristics.

For the purpose of increasing and/or maintaining contact between the anode layer and the solid electrolyte layer, a pressing process may be performed during preparation (manufacture) of the all-solid secondary battery. In the pressing process, a pressure difference may occur at an unstacked part in a stack including a cathode layer, an anode layer, and a solid electrolyte layer (e.g., in regions of the stack that are not in contact with another layer), and the solid electrolyte layer may have micro-defects due to the pressure difference. The micro-defects may grow to become cracks in the solid electrolyte layer during charging/discharging of the all-solid secondary battery. When lithium is grown through (e.g., deposited in) these cracks, a short-circuit may occur between the cathode layer and the anode layer.

According to an aspect of an embodiment, an all-solid secondary battery has a novel structure, such that a short-circuit during charging/discharging of the battery may be prevented or reduced, and the cycle characteristics of the battery may be improved.

The present disclosure allows for various changes and numerous embodiments, and example embodiments will be illustrated in the drawings and described in more detail in the written description. However, this is not intended to limit the present disclosure to particular modes of practice, and it is to be appreciated that all changes, equivalents, and substitutes that do not depart from the technical scope are encompassed in the present disclosure.

The terms used herein are merely used to describe example embodiments, and are not intended to limit the present disclosure. An expression used in the singular (including terms such as "a," "an," and "the") encompasses the expression of the plural, unless the context clearly indicates otherwise. As used herein, it is to be understood that terms such as "including," "having," and "comprising" are intended to indicate the existence of features, numbers, steps, actions, components, parts, ingredients, materials, or combinations thereof disclosed in the specification, and are not intended to preclude the possibility that one or more other features, numbers, steps, actions, components, parts, ingredients, materials, or combinations thereof may exist or may be added. The symbol "/" used herein may be interpreted as "and" or "or" according to the context. Further, the use of "may" when describing embodiments of the present disclosure refers to "one or more embodiments of the present disclosure".

In the drawings, the thicknesses of layers and regions may be exaggerated or reduced for clarity. Throughout the specification, it will be understood that when a component, such as a layer, a film, a region, or a plate, is referred to as being "on" another component, the component may be directly on the other component or intervening components may be present therebetween. When an element is referred to as being "directly on," "directly connected to," or "directly coupled to" another element, there are no intervening elements present. Throughout the specification, while such terms as "first," "second," etc., may be used to describe various components, such components must not be limited to the above terms. The above terms are used only to distinguish one component from another. The average particle diameter of the particles may be a volume-converted median diameter (D50) measured by using a laser-diffraction particle size distribution meter.

Hereinafter, according to one or more embodiments, an all-solid secondary battery and a method of preparing the all-solid secondary battery will be described in detail.

### [All-solid secondary battery]

According to an embodiment, an all-solid secondary battery includes a cathode layer; an anode layer; and a solid electrolyte layer disposed between the cathode layer and the anode layer, where the cathode layer includes a cathode current collector, a cathode active material layer disposed on the cathode current collector, and an inactive member disposed on one (e.g., at least one) side surface of the cathode active material layer, and the anode layer includes an anode current collector and a first anode active material layer disposed on the anode current collector. When the all-solid secondary battery includes the inactive member disposed on at least one side surface of the cathode active material layer, cracks in the solid electrolyte layer during pressing of the all-solid secondary battery may be suppressed or reduced. Therefore, cracks in the solid electrolyte layer may be suppressed during charge and discharge of the all-solid secondary battery, and a short circuit of the all-solid secondary battery may be suppressed or reduced. As a result, cycle characteristics of the all-solid secondary battery may be improved.

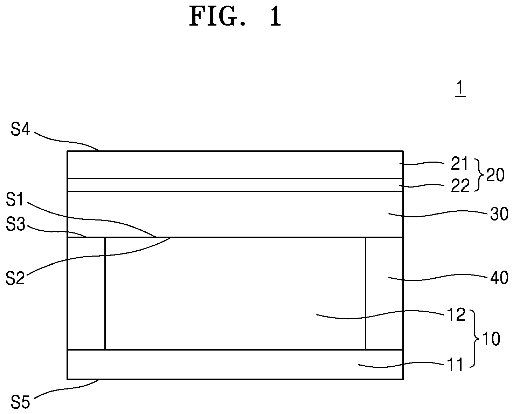

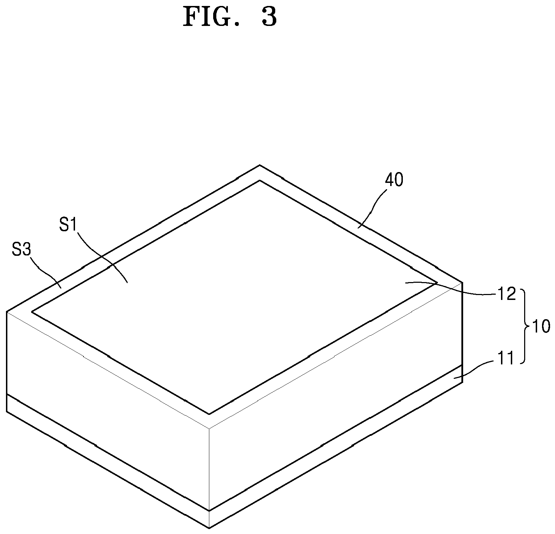

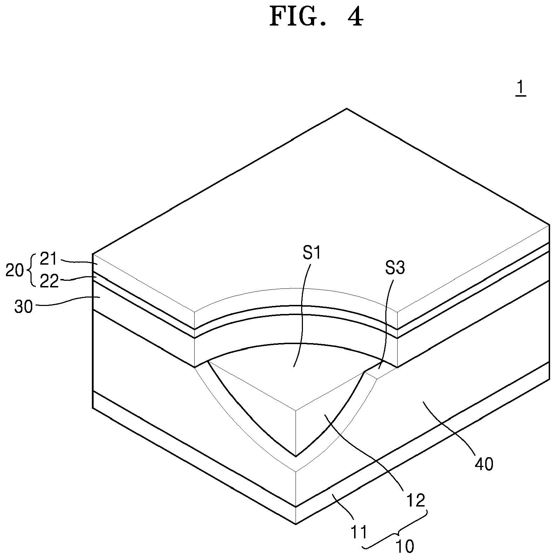

Referring to FIGS. 1 to 4, an all-solid secondary battery 1 includes a cathode layer 10; an anode layer(s) 20 or 20a and 20b; and a solid electrolyte layer(s) 30 or 30a and 30b disposed between the cathode layer 10 and the anode layer(s) 20 or 20a and 20b. As used herein, the term "anode layer(s) 20 or 20a and 20b" and like terms indicate the presence of one layer 20, or the presence of two layers 20a and 20b. The cathode layer 10 includes a cathode current collector 11, a cathode active material layer(s) 12 or 12a and 12b disposed on the cathode current collector 11, and an inactive member 40 disposed on at least one side surface of the cathode active material layer(s) 12 or 12a and 12b. The anode layer(s) 20 or 20a and 20b include an anode current collector(s) 21 or 21a and 21b and a first anode active material layer(s) 22 or 22a and 22b disposed on the anode current collector(s) 21 or 21a and 21b.

### [Cathode layer]

### [Cathode layer: Inactive member]

The cathode layer 10 includes the cathode current collector 11, the cathode active material layer(s) 12 or 12a and 12b disposed on the cathode current collector 11, and the inactive member 40 disposed on at least one side surface of the cathode active material layer(s) 12 or 12a and 12b.

The inactive member 40 is a member (e.g., device element) that does not include an electrochemically active material or electrode active material. An electrode active material is a material capable of absorbing/desorbing or intercalation/deintercalating lithium. The inactive member 40 may be formed of any suitable material in the art that is not an electrode active material.

The inactive member 40 may contact the solid electrolyte layer(s) 30 or 30a and 30b while surrounding one or more side surfaces of the cathode active material layer(s) 12 or 12a and 12b. When the inactive member 40 contacts the solid electrolyte layer(s) 30 or 30a and 30b while surrounding one or more side surfaces of the cathode active material layer(s) 12 or 12a and 12b, crack generation in the solid electrolyte layer(s) 30 or 30a and 30b by a pressure difference in a part of the solid electrolyte layer(s) 30 or 30a and 30b not in contact with the cathode active material layer(s) 12 or 12a and 12b during a pressing process may be effectively suppressed.

The inactive member 40 may extend to one or more distal ends (edges) of the solid electrolyte layer(s) 30 or 30a and 30b. When the inactive member 40 extends to distal ends of the solid electrolyte layer(s) 30 or 30a and 30b, cracks at the distal ends of the solid electrolyte layer(s) 30 or 30a and 30b may be suppressed or reduced. The distal ends of the solid electrolyte layer(s) 30 or 30a and 30b are the outermost parts of the battery contacting side surfaces of the solid electrolyte layer(s) 30 or 30a and 30b (e.g., the distal edges contact the inner perimeter of the battery). That is, the inactive member 40 may extend to the outermost parts of the battery contacting side surfaces of the solid electrolyte layer(s) 30 or 30a and 30b.

An area (e.g., surface area) Si of the cathode active material layer(s) 12 or 12a and 12b may be smaller than an area S2 of the solid electrolyte layer(s) 30 or 30a and 30b that are in contact with (e.g., facing) the cathode active material layer(s) 12 or 12a and 12b, and the inactive member 40 may be disposed so that it surrounds one or more, for example all side surfaces of the cathode active material layer(s) 12 or 12a and 12b, and may thus correct an area error (e.g., mismatch) between the cathode active material layer(s) 12 or 12a and 12b and the solid electrolyte layer(s) 30 or 30a and 30b. When an area S3 of the inactive member 40 (e.g., facing the solid electrolyte layer(s) 30 or 30a and 30b) corrects a difference between the area S1 of the cathode active material layer(s) 12 or 12a and 12b and the area S2 of the solid electrolyte layer(s) 30 or 30a and 30b, cracks generated in the solid electrolyte layer(s) 30 or 30a and 30b by a pressure difference during a pressing process may be effectively suppressed. For example, the area Si of the cathode active material layer(s) 12 or 12a and 12b may be less than about 100%, about 99% or less, about 98% or less, about 97% or less, about 96% or less, about 95% or less, or about 93% or less of the area S2 of the solid electrolyte layer(s) 30 or 30a and 30b. For example, the area S1 of the cathode active material layer(s) 12 or 12a and 12b maybe about 50% to less than about 100%, about 50% to about 99%, about 55% to about 98%, about 60% to about 97%, about 70% to about 96%, about 80% to about 95%, or about 85% to about 95% of the area S2 of the solid electrolyte layer(s) 30 or 30a and 30b. When the area Si of the cathode active material layer(s) 12 or 12a and 12b is substantially equal to or greater than the area S2 of the solid electrolyte layer(s) 30 or 30a and 30b, a possibility of a short circuit (occurring by physical contact between the cathode active material layer 12 and the anode active material layer 22 or between the cathode active material layers 12a and 12b and the anode active material layers 22a and 22b, and/or by overcharge of lithium) may increase.

An area S3 of the inactive member 40 may be about 50% or less, about 40% or less, about 30% or less, about 20% or less, or about 10% or less of the area S1 of the cathode active material layer(s) 12 or 12a and 12b. For example, the area S3 of the inactive member 40 may be about 1% to about 50%, about 5% to about 40%, about 5% to about 30%, about 5% to about 20%, or about 5% to about 15% of the area S1 of the cathode active material layer(s) 12 or 12a and 12b. A sum of the area S3 of the inactive member and the area S1 of the cathode active material layer(s) 12 or 12a and 12b may be the same with (e.g., substantially the same as) the area S2 of the solid electrolyte layer(s) 30 or 30a and 30b.

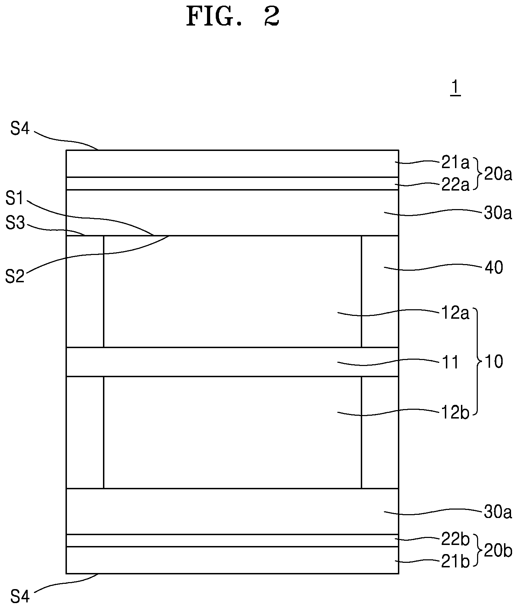

The inactive member 40 may be disposed between the cathode current collector 11 and the solid electrolyte layer 30, which face each other (e.g., as shown in the structure of FIG. 1), or the inactive member 40 may be disposed between the two solid electrolyte layers 30a and 30b, which face each other (e.g., as shown in the structure of FIG. 2). The inactive member 40 may serve as a filler that fills a space between the cathode current collector 11 and the solid electrolyte layer 30, which face each other, or between the two solid electrolyte layers 30a and 30b, which face each other.

The area S1 of the cathode active material layer(s) 12 or 12a and 12b may be smaller than an area (e.g., planar surface area) S4 of the anode current collector(s) 21 or 21a and 21b. For example, the area S1 of the cathode active material layer(s) 12 or 12a and 12b may be less than about 100%, about 99% or less, about 98% or less, about 97% or less, about 96% or less, about 95% or less, or about 93% or less of the area S4 of the anode current collector(s) 21 or 21a and 21b. For example, the area S1 of the cathode active material layer(s) 12 or 12a and 12b may be about 50% to less than about 100%, about 50% to about 99%, about 55% to about 98%, about 60% to about 97%, about 70% to about 96%, about 80% to about 95%, or about 85% to about 95% of the area S4 of the anode current collector(s) 21 or 21a and 21b.

A shape and/or the area S4 of the anode current collector(s) 21 or 21a and 21b may be the same as a shape and/or an area S5 of the cathode current collector 11. For example, the area S4 of the anode current collector(s) 21 or 21a and 21b may be about 100±5 %, about 100±3 %, about 100±2 %, about 100±1 % or about 100±0.5 % of the area S5 of the cathode current collector 11. A shape and/or the area S5 of the cathode current collector 11 may be the same with a shape and/or the area S2 of the solid electrolyte layer(s) 30 or 30a and 30b. For example, the area S5 of the cathode current collector 11 maybe about 100±5 %, about 100±3 % about 100±2 %, about 100±1% or about 100±0.5 % of the area S2 of the solid electrolyte layer(s) 30 or 30a and 30b. As used herein, the "same" area and/or shape includes all cases having "substantially the same" area and/or shape, except when an area and/or a shape is intentionally changed (e.g., described as being intentionally different).

The inactive member 40 may include at least one selected from a lithium ion insulator and a lithium ion conductor. In some embodiments, the inactive member 40 may be or include an electronic insulator. In some embodiments, the inactive member 40 may not be an electronic insulator.

The inactive member 40 may be an organic material, an inorganic material, or an organic-inorganic composite material. The organic material may be, for example, a polymer. The inorganic material may be, for example, a ceramic (such as a metal oxide). The organic-inorganic composite material may be a composite of a polymer and a metal oxide. The inactive member 40 may include, for example, at least one selected from an insulating polymer, an ionic conductive polymer, an insulating inorganic material, an oxide-based solid electrolyte, and a sulfide-based solid electrolyte. The inactive member 40 may be, for example, an olefin-based polymer (such as polypropylene (PP) and/or polyethylene (PE)).

A density of the inactive member 40 may be, for example, about 10% to about 200%, about 10% to about 150%, about 10% to about 140%, about 10% to about 130%, or about 10% to about 120% of a density of a cathode active material included in the cathode active material layer(s) 12 or 12a and 12b. A density of the inactive member 40 may be, for example, about 90% to about 110% of a density of a cathode active material included in the cathode active material layer(s) 12 or 12a and 12b. A density of the inactive member 40 may be, for example, substantially similar to a density of a cathode active material included in the cathode active material layer(s) 12 or 12a and 12b.

The inactive member 40 may be or function as, for example, a gasket. When the inactive member 40 is used as a gasket, cracks generated in the solid electrolyte layer(s) 30 or 30a and 30b by a pressure difference during a pressing process may be effectively suppressed or reduced.

### [Cathode layer: Cathode active material]

In some embodiments, the cathode active material layer(s) 12 or 12a and 12b may include a cathode active material and a solid electrolyte.

The cathode active material is a compound capable of reversibly absorbing and desorbing (or intercalating and deintercalating) lithium ions. Non-limiting examples of the cathode active material include a lithium transition metal oxide (such as a lithium cobalt oxide (LCO), a lithium nickel oxide, a lithium nickel cobalt oxide, a lithium nickel cobalt aluminum oxide (NCA), a lithium nickel cobalt manganese oxide (NCM), a lithium manganate, and/or a lithium iron phosphate); a nickel sulfide; a copper sulfide; a lithium sulfide; an iron oxide; and a vanadium oxide, but any suitable material available as a cathode active material in the art may be used. The cathode active material may be used alone or in a mixture of at least two selected from the above examples.

The cathode active material, e.g., lithium transition metal oxide, may be, for example, a compound represented by one of the following formulae:

LiₐA_{1-b}B'_{b}D₂ (where 0.90 ≤ a ≤ 1 and o ≤ b ≤ 0.5); LiₐE_{1-b}B'_{b}O_{2-c}D_{c} (where 0.90 ≤ a≤ 1, 0 ≤ b ≤ 0.5, and o ≤ c ≤ 0.05); LiE_{2-b}B'_{b}O_{4-c}D_{c} (where o ≤ b ≤ 0.5 and o ≤ c ≤ 0.05); LiₐNi_{1-b-c}Co_{b}B'_{c}D_{α} (where 0.90 ≤ a ≤ 1, 0 ≤ b ≤ 0.5, 0 ≤ c ≤ 0.05, and o < α ≤ 2); LiₐNi_{1-b-c}Co_{b}B'_{c}O_{2-α}F'_{α} (where 0.90 ≤ a ≤ 1, 0 ≤ b ≤ 0.5, 0 ≤ c ≤ 0.05, and o < α < 2); LiₐNi_{1-b-c}Co_{b}B'_{c}O_{2-α}F'₂ (where 0.90 ≤ a≤ 1, 0 ≤ b ≤ 0.5, 0 ≤ c ≤ 0.05, and o < α < 2); LiₐNi_{1-b-c}Mn_{b}B'_{c}D_{α} (where 0.90 ≤ a ≤ 1, 0 ≤ b ≤ 0.5, 0 ≤ c ≤ 0.05, and o < α ≤ 2); LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, and o < α < 2); LiₐNi_{1-b-c}Mn_{b}B'_{c}O_{2-α}F'₂ (where 0.90 ≤ a ≤ 1, 0 ≤ b ≤ 0.5, 0 ≤ c ≤ 0.05, and o < α < 2); LiₐNi_{b}E_{c}G_{d}O₂ (where 0.90 ≤ a ≤ 1, 0 ≤ b ≤ 0.9, o ≤ c ≤ 0.5, and 0.001 ≤ d ≤ 0.1);LiₐNi_{b}Co_{c}Mn_{d}GₑO₂ (where 0.90 ≤ a≤ 1, 0 ≤ b ≤ 0.9, 0 ≤ c ≤ 0.5, 0 ≤ d ≤ 0.5, and 0.001 ≤ e ≤ 0.1);LiₐNiG_{b}O₂ (where 0.90 ≤ a ≤ 1 and 0.001 ≤ b ≤ 0.1);LiₐCoG_{b}O₂ (where 0.90 ≤ a ≤ 1 and 0.001 ≤ b ≤ 0.1);LiₐMnG_{b}O₂ (where 0.90 ≤ a ≤ 1 and 0.001 ≤ b ≤ 0.1);LiₐMn₂G_{b}O₄ (where 0.90 ≤ a ≤ 1 and 0.001 ≤ b ≤ 0.1);QO₂; QS₂; LiQS₂; V₂O₅; LiV₂O₅; LiI'O₂; LiNiVO₄; Li_{(3-f)}J₂(PO₄)₃ (where 0 ≤ f ≤ 2); Li_{(3-f)}Fe₂(PO₄)₃ (where 0 ≤ f ≤ ₂); and LiFePO₄. In the compound, A may be nickel (Ni), cobalt (Co), manganese (Mn), or a combination thereof; B' may be aluminum (Al), nickel (Ni), cobalt (Co), manganese (Mn), chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be cobalt (Co), manganese (Mn), or a combination thereof; F' may be fluorine (F), sulfur (S), phosphorus (P), or a combination thereof; G may be (Al), chromium (Cr), manganese (Mn), iron (Fe), magnesium (Mg), lanthanum (La), cerium (Ce), strontium (Sr), vanadium (V), or a combination thereof; Q may be titanium (Ti), molybdenum (Mo), manganese (Mn), or a combination thereof; I' may be chromium (Cr), vanadium (V), iron (Fe), scandium (Sc), yttrium (Y), or a combination thereof; and J may be vanadium (V), chromium (Cr), manganese (Mn), cobalt (Co), nickel (Ni), copper (Cu), or a combination thereof. The compound may have a surface coating layer (hereinafter, also referred to as "coating layer"). In some embodiments, a mixture of a compound without a coating layer and a compound having a coating layer may be used, the compounds being selected from the compounds listed above. In some embodiments, the coating layer may include at least one compound of a coating element selected from the group consisting of oxide, hydroxide, oxyhydroxide, oxycarbonate, and hydroxycarbonate of the coating element. In some embodiments, the compounds for the coating layer may be amorphous or crystalline. In some embodiments, the coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed using any method that does not adversely affect the physical properties of the cathode active material when a compound of the coating element is used. For example, the coating layer may be formed using a spray coating method or a dipping method. The coating methods may be well understood by one of ordinary skill in the art, and thus a detailed description thereof will be omitted.

The cathode active material may include, for example, a lithium salt of a transition metal oxide having a layered rock-salt type structure, among the examples of the lithium transition metal oxide. For example, the term "layered rock-salt type structure" refers to a structure in which an oxygen atom layer and a metal atom layer are alternatingly and regularly arranged along the <111> direction in a cubic rock-salt type structure, where each of the atom layers forms a two-dimensional flat plane. The term "cubic rock-salt type structure" refers to a sodium chloride (NaCl) type structure, which is a named crystalline structure, and for example, to a structure in which a face-centered cubic (fcc) lattice respectively formed of anions and cations is shifted by only a half unit of each unit lattice. Non-limiting examples of the lithium transition metal oxide having the layered rock-salt type structure include a ternary lithium transition metal oxide (such as LiNiₓCo_{y}Al_{z}O₂ (NCA) and/or LiNiₓCo_{y}Mn_{z}O₂ (NCM) (where 0 < x < 1, 0 < y < 1, 0 < z < 1, and x + y + z = 1)) and LiNiₓCo_{y}Mn_{z}Al_{w}O₂ (NCMA) (where 0 < x < 1, 0 < y < 1, 0 < z < 1, 0 < w < 1, and x + y + z + w = 1). When the cathode active material includes a ternary transition metal oxide having the layered rock-salt type structure, an energy density and/or thermal stability of the all-solid secondary battery 1 may be improved.

The cathode active material particles may be covered by a coating layer as described above. The coating layer may include any suitable material for a coating layer of a cathode active material in an all-solid secondary battery in the art. The coating layer may be, for example, Li₂O-ZrO₂ (LZO).

When the cathode active material includes nickel (Ni) as a ternary lithium transition metal oxide (such as NCA and/or NCM), a capacity density of the all-solid secondary battery 1 may increase, and thus metal elution from the cathode active material in a charged state may be reduced. As a result, the all-solid secondary battery 1 according to an embodiment may have improved cycle characteristics.

The cathode active material particle may have any suitable shape (such as a true spherical shape, an ellipsoidal shape, and/or a spherical shape). The cathode active material may have any suitable particle diameter for a cathode active material of a related art all-solid secondary battery. The amount of the cathode active material of the cathode 10 is not particularly limited and may be any suitable amount for a cathode layer of a related art all-solid secondary battery.

### [Cathode layer: Solid electrolyte]

The solid electrolyte in the cathode layer 10 may be identical to or different from a solid electrolyte in the solid electrolyte layer(s) 30 or 30a and 30b. In some embodiments, details of the solid electrolyte may be the same as described in relation to the solid electrolyte layer(s) 30 or 30a and 30b.

A D50 average particle diameter of the solid electrolyte in the cathode active material layer(s) 12 or 12a and 12b may be smaller than that of the solid electrolyte in the solid electrolyte layer(s) 30 or 30a and 30b. For example, a D50 average particle diameter of the solid electrolyte in the cathode active material layer(s) 12 or 12a and 12b may be about 90% or less, about 80% or less, about 70% or less, about 60% or less, about 50% or less, about 40% or less, about 30% or less, or about 20% or less of the D50 average particle diameter of the solid electrolyte in the solid electrolyte layer(s) 30 or 30a and 30b.

### [Cathode layer: Binder]

The cathode active material layer(s) 12 or 12a and 12b may include a binder. Non-limiting examples of the binder include styrene-butadiene rubber (SBR), polytetrafluoroethylene, polyvinylidene fluoride, and polyethylene.

### [Cathode layer: Conducting agent]

The cathode active material layer(s) 12 or 12a and 12b may include a conducting agent. Non-limiting examples of the conducting agent may include graphite, carbon black, acetylene black, ketjen black, carbon fiber, and metal powder.

### [Cathode layer: Other additives]

The cathode active material layer(s) 12 or 12a and 12b may further include any suitable additive (such as a filler, a coating agent, a dispersant, and/or an ionic conducting agent) in addition to the cathode active material, solid electrolyte, binder, and conductive agent described above.

The filler, coating agent, dispersant, and ion conducting agent that may be included in the cathode active material layer(s) 12 or 12a and 12b may be any suitable material available for an electrode of an all-solid secondary battery in the art.

### [Cathode layer: Cathode current collector]

The cathode current collector 11 may use or be, for example, a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may be omitted.

### [Solid electrolyte layer]

### [Solid electrolyte layer: Solid electrolyte]

Referring to FIGS. 1 to 4, the solid electrolyte layer(s) 30 or 30a and 30b may be disposed between the cathode layer 10 and the anode layer(s) 20 or 20a and 20b, and may include a sulfide-based solid electrolyte.

The solid electrolyte may be, for example, a sulfide-based solid electrolyte. Non-limiting examples of the sulfide-based solid electrolyte include at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n each are a positive number of greater than 0 to 10, and Z represents any of Ge, Zn, and Ga), Li2S-GeS₂, Li₂S-SiS₂-Li₃PO₄, Li₂S-SiS₂-LiₚMO_{q} (where p and q each are a positive number, and M represents any of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be prepared by melting and quenching starting (reactant) materials (e.g., Li₂S or P₂S₅), or mechanically milling the starting materials. The resultant may subsequently be heat-treated. The sulfide-based solid electrolyte may be amorphous, crystalline, or in a mixed form thereof. In some embodiments, the sulfide-based solid electrolyte may include at least sulfur (S), phosphorus (P), and lithium (Li) as component elements within the sulfide-based solid electrolyte materials. For example, the sulfide-based solid electrolyte may be a material including Li₂S-P₂S₅. Here, when the material including Li₂S-P₂S₅ is used as a sulfide-based solid electrolyte material, a mixing molar ratio of Li₂S and P₂S₅ (Li₂S:P₂S₅) may be, for example, about 50:50 to about 90:10.

For example, the sulfide-based solid electrolyte may include an argyrodite-type solid electrolyte represented by Formula 1:

**Formula 1** Li⁺₁₂₋ₙ₋ₓAⁿ⁺X²⁻₆₋ₓY⁻ₓ.

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. The sulfide-based solid electrolyte may be an argyrodite-type solid electrolyte including at least one selected from Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be an argyrodite-type compound including at least one selected from Li₆PS₅Cl, Li₆PS₅Br, and Li₆PS₅I.

A density of the argyrodite-type solid electrolyte may be about 1.5 g/cc to about 2.0 g/cc. When the density of the argyrodite-type solid electrolyte is about 1.5 g/cc or higher, internal resistance of the all-solid secondary battery may decrease, and penetration of the solid electrolyte layer(s) 30 or 30a and 30b by Li may be effectively suppressed or reduced.

### [Solid electrolyte layer: Binder]

The solid electrolyte layer(s) 30 or 30a and 30b may include, for example, a binder. Non-limiting examples of the binder in the solid electrolyte layer(s) 30 or 30a and 30b include styrene-butadiene rubber (SBR), polytetrafluoroethylene, polyvinylidene fluoride, and polyethylene, but any material available as a binder in the art may be used. The binder of the solid electrolyte layer(s) 30 or 30a and 30b may be identical to or different from the binders in the cathode active material layer(s) 12 or 12a and 12b and the first anode active material layer(s) 22 or 22a and 22b.

### [Anode layer]

### [Anode layer: Anode active material]

In some embodiments, the first anode active material layer(s) 22 or 22a and 22b may include an anode active material and a binder.

The anode active material in the first anode active material layer(s) 22 or 22a and 22b may be, for example, in the form of particles. An average particle diameter of the anode active material in the form of particles may be, for example, about 4 µm or less, about 3 µm or less, about 2 µm or less, about 1 µm or less, or about 900 nm or less. An average particle diameter of the anode active material in the form of particles may be, for example, about 10 nm to about 4 µm or less, about 10 nm to about 3 µm or less, about 10 nm to about 2 µm or less, about 10 nm to about 1 µm or less, or about 10 nm to about 900 nm or less. When the average particle diameter of the anode active material is within these ranges, reversible absorbing and/or desorbing of lithium during charging/discharging may further be facilitated. The average particle diameter of the anode active material may be, for example, a median diameter (D50) measured using a laser diffraction particle diameter distribution meter.

The anode active material in the first anode active material layer(s) 22 or 22a and 22b may include, for example, at least one selected from a carbonaceous anode active material and a metal or metalloid anode active material.

The carbonaceous anode active material may be an amorphous carbon. Non-limiting examples of the amorphous carbon include carbon black (CB), acetylene black (AB), furnace black (FB), ketjen black (KB), and graphene, but any material available as amorphous carbon in the art may be used. The amorphous carbon may be carbon having little crystallinity or a very low crystallinity or no crystallinity which is different from crystalline carbon or graphitebased carbon.

Non-limiting examples of the metal or metalloid anode active material may include at least one selected from the group consisting of gold (Au), platinum (Pt), palladium (Pd), silicon (Si), silver (Ag), aluminum (Al), bismuth (Bi), tin (Sn), and zinc (Zn), but any material available as a metal anode active material or a metalloid anode active material capable of forming an alloy or a compound with lithium in the art may be used. For example, nickel (Ni) does not form an alloy with lithium and thus is not a metal anode active material.

The first anode active material layer(s) 22 or 22a and 22b may include one anode active material or may include a mixture of a plurality of different anode active materials selected from these anode active materials. For example, the first anode active material layer(s) 22 or 22a and 22b may only include amorphous carbon or may include at least one selected from the group consisting of gold (Au), platinum (Pt), palladium (Pd), silicon (Si), silver (Ag), aluminum (Al), bismuth (Bi), tin (Sn), and zinc (Zn). In some embodiments, the first anode active material layer(s) 22 or 22a and 22b may include a mixture including amorphous carbon and at least one selected from the group consisting of gold (Au), platinum (Pt), palladium (Pd), silicon (Si), silver (Ag), aluminum (Al), bismuth (Bi), tin (Sn), and zinc (Zn). A mixing ratio (weight ratio) of the amorphous carbon and at least one selected from the group consisting of gold (Au), platinum (Pt), palladium (Pd), silicon (Si), silver (Ag), aluminum (Al), bismuth (Bi), tin (Sn), and zinc (Zn) maybe, for example, about 10:1 to about 1:2, about 5:1 to about 1:1, or about 4:1 to about 2:1, but embodiments are not limited thereto, and the mixing ratio may be selected according to suitable characteristics of the all-solid secondary battery 1. When the anode active material has the above-described composition, the cycle characteristics of the all-solid secondary battery 1 may be further improved.

The anode active material in the anode active material layer(s) 22 or 22a and 22b may include, for example, a mixture including first particles formed of amorphous carbon and second particles formed of a metal or a metalloid. Non-limiting examples of the metal or metalloid include gold (Au), platinum (Pt), palladium (Pd), silicon (Si), silver (Ag), aluminum (Al), bismuth (Bi), tin (Sn), and zinc (Zn). In some embodiments, the metalloid may be a semiconductor. An amount of the second particles may be about 8 weight% to about 60 weight%, about 10 weight% to about 50 weight%, about 15 weight% to about 40 weight%, or about 20 weight% to about 30 weight% based on the total weight of the mixture. When the amount of the second particles is within these ranges, for example, cycle characteristics of the all-solid secondary battery 1 may further improve.

### [Anode layer: Binder]

Non-limiting examples of the binder in the first anode active material layer(s) 22 or 22a and 22b include styrene-butadiene rubber (SBR), polytetrafluoroethylene, polyvinylidene fluoride, polyethylene, a vinylidene fluoride/hexafluoropropylene copolymer, polyacrylonitrile, and polymethylmethacrylate, but any material available as a binder in the art may be used The binder may be formed of a single binder or a plurality (mixture) of different binders.

When the first anode active material layer 22 includes the binder, the first anode active material layer(s) 22 or 22a and 22b may be stabilized on the anode current collector(s) 21 or 21a and 21b. Also, cracks in the first anode active material layer(s) 22 or 22a and 22b may be suppressed or reduced in spite of volume changes and/or relative location changes of the first anode active material layer(s) 22 or 22a and 22b during charging/discharging. For example, when the first anode active material layer(s) 22 or 22a and 22b do not include a binder, the first anode active material layer(s) 22 or 22a and 22b may be easily separated from the anode current collector(s) 21 or 21a and 21b. When a part of the anode current collector(s) 21 or 21a and 21b is exposed by the separation of the first anode active material layer(s) 22 or 22a and 22b, the anode current collector(s) 21 or 21a and 21b may contact the solid electrolyte layer 30, and thus a possibility of short-circuit occurrence may increase. The first anode active material layer(s) 22 or 22a and 22b may be prepared by, for example, coating and drying a slurry (in which materials forming the first anode active material layer(s) 22 or 22a and 22b are dispersed) on the anode current collector(s) 21 or 21a and 21b. When the binder is included in the first anode active material layer(s) 22 or 22a and 22b, the anode active material may be stably dispersed in the slurry. For example, when the slurry is coated on the anode current collector(s) 21 or 21a and 21b using a screen printing method, clogging of the screen (e.g., clogging by an aggregate of the anode active material) may be suppressed or reduced.

### [Anode layer: Other additives]

The first anode active material layer(s) 22 or 22a and 22b may further include additives that are used in a conventional all-solid secondary battery (such as a filler, a coating agent, a dispersant, and/or an ionic conducting agent).

### [Anode layer: First anode active material layer]

A thickness of the first anode active material layer(s) 22 or 22a and 22b may be, for example, about 50% or less, about 40% or less, about 30% or less, about 20% or less, about 10% or less, or about 5% or less of a thickness of the cathode active material layer(s) 12 or 12a and 12b. For example, a thickness of the first anode active material layer(s) 22 or 22a and 22b may be about 1 µm to about 20 µm, about 2 µm to about 10 µm, or about 3 µm to about 7 µm. When the thickness of the first anode active material layer(s) 22 or 22a and 22b is too thin, lithium dendrites may form between the first anode active material layer(s) 22 or 22a and 22b and the anode current collector(s) 21 or 21a and 21b and may destroy the first anode active material layer(s) 22 or 22a and 22b, and thus the cycle characteristics of the all-solid secondary battery 1 may not be improved. When the thickness of the first anode active material layer(s) 22 or 22a and 22b is too thick, an energy density of the all-solid secondary battery 1 may be deteriorated and internal resistance of the all-solid secondary battery 1 by the first anode active material layer(s) 22 or 22a and 22b may increase, and thus cycle characteristics of the all-solid secondary battery 1 may not be improved.

For example, when the thickness of the first anode active material layer(s) 22 or 22a and 22b decreases, a charge capacity of the first anode active material layer(s) 22 or 22a and 22b may also decrease. The charge capacity of the first anode active material layer(s) 22 or 22a and 22b may be, for example, about 50% or lower, about 40% or lower, about 30% or lower, about 20% or lower, about 10% or lower, about 5% or lower, or about 2% or lower of a charge capacity of the cathode active material layer(s) 12 or 12a and 12b. The charge capacity of the first anode active material layer(s) 22 or 22a and 22b maybe, for example, about 0.1% to about 50%, about 0.1% to about 40%, about 0.1% to about 30%, about 0.1% to about 20%, about 0.1% to about 10%, about 0.1% to about 5%, or about 0.1% to about 2% of a charge capacity of the cathode active material layer(s) 12 or 12a and 12b. When the charge capacity of the first anode active material layer(s) 22 or 22a and 22b is too low, a thickness of the first anode active material layer(s) 22 or 22a and 22b is too thin, and lithium dendrite may form between the first anode active material layer(s) 22 or 22a and 22b and the anode current collector(s) 21 or 21a and 21b during repeated charging/discharging processes to destroy the first anode active material layer(s) 22 or 22a and 22b, and thus the cycle characteristics of the all-solid secondary battery 1 may not be improved. When the charge capacity of the first anode active material layer(s) 22 or 22a and 22b is too high, an energy density of the all-solid secondary battery 1 may be deteriorated and internal resistance of the all-solid secondary battery 1 by the first anode active material layer(s) 22 or 22a and 22b may increase, and thus cycle characteristics of the all-solid secondary battery 1 may not be improved.

The charge capacity of the cathode active material layer(s) 12 or 12a and 12b may be obtained by multiplying a weight (mass) of the cathode active material in the cathode active material layer(s) 12 or 12a and 12b by a charge capacity density (mAh/g) of the cathode active material. When various (multiple) types of materials are used as the cathode active material, a value of a charge capacity density x a weight is calculated for each of the cathode active materials, and the sum total of these values is a charge capacity of the cathode active material layer(s) 12 or 12a and 12b. A charge capacity of the first anode active material layer(s) 22 or 22a and 22b may be calculated in substantially the same manner. For example, a charge capacity of the first anode active material layer(s) 22 or 22a and 22b is obtained by multiplying a weight of the anode active material in the first anode active material layer(s) 22 or 22a and 22b by a charge capacity density (mAh/g) of the anode active material. When various types of materials are used as the anode active material, a value of a charge capacity density x a weight of each of the anode active materials is calculated, and the total of these values is a charge capacity of the first anode active material layer(s) 22 or 22a and 22b. Here, the charge capacity densities of the cathode active material and the anode active material are capacities estimated using an all-solid half-cell in which lithium metal is used as a counter electrode. The charge capacities of the cathode active material layer(s) 12 or 12a and 12b and the first anode active material layer(s) 22 or 22a and 22b are directly measured by charge capacity measurement using an all-solid half-cell. When the measured charge capacity is divided by a weight of each of the active materials, a charge capacity density may be obtained. In some embodiments, the charge capacities of the cathode active material layer(s) 12 or 12a and 12b and the first anode active material layer(s) 22 or 22a and 22b may be initial charge capacities measured in the 1^{st} charging cycle.

### [Anode layer: Second anode active material layer]

The all-solid secondary battery 1 may, for example, further include a second anode active material layer between the anode current collector(s) 21 or 21a and 21b and the first anode active material layer(s) 22 or 22a and 22b. The second anode active material layer may be a plated layer including lithium or a lithium alloy. The plated layer may be plated by charging the battery. The second anode active material layer is a metal layer including lithium or a lithium alloy. The metal layer includes lithium or a lithium alloy. In this regard, for example, because the second anode active material layer is a metal layer including lithium, the second anode active material layer may serve as a lithium reservoir. Non-limiting examples of the lithium alloy include a Li-Al alloy, a Li-Sn alloy, a Li-In alloy, a Li-Ag alloy, a Li-Au alloy, a Li-Zn alloy, a Li-Ge alloy, and a Li-Si alloy, but any material available as a lithium alloy in the art may be used. The second anode active material layer may be formed of a single alloy of lithium or may be formed of various alloys of lithium.

A thickness of the second anode active material layer may be, for example, about 1 µm to about 1000 µm, about 1 µm to about 500 µm, about 1 µm to about 200 µm, about 1 µm to about 150 µm, about 1 µm to about 100 µm, or about 1 µm to about 50 µm, but embodiments are not limited thereto. When the thickness of the second anode active material layer is too thin, the second anode active material layer may not serve as a lithium reservoir. When the thickness of the second anode active material layer is too thick, a weight and a volume of the all-solid secondary battery 1 may increase, and cycle characteristics may be deteriorated. The second anode active material layer may be, for example, a metal foil having a thickness in these ranges.

In the all-solid secondary battery 1, the second anode active material layer may be disposed between the anode current collector(s) 21 or 21a and 21b and the first anode active material layer(s) 22 or 22a and 22b before assembling the all-solid secondary battery 1, or may be plated between the anode current collector(s) 21 or 21a and 21b and the first anode active material layer(s) 22 or 22a and 22b by charging after assembling the all-solid secondary battery 1. When the second anode active material layer is disposed between the anode current collector(s) 21 or 21a and 21b and the first anode active material layer(s) 22 or 22a and 22b before assembling the all-solid secondary battery 1, the second anode active material layer may be a metal layer including lithium and may thus serve as a lithium reservoir. For example, a lithium foil may be disposed between the anode current collector(s) 21 or 21a and 21b and the first anode active material layer(s) 22 or 22a and 22b before assembling the all-solid secondary battery 1. In this regard, cycle characteristics of the all-solid secondary battery 1 including the second anode active material layer may be further improved. When the second anode active material layer is plated by charging after assembling the all-solid secondary battery 1, an energy density of the all-solid secondary battery 1 may increase due to not including the second anode active material layer during the assembling of the all-solid secondary battery 1. For example, the all-solid secondary battery 1 may be charged over a charge capacity of the first anode active material layer(s) 22 or 22a and 22b. For example, the first anode active material layer(s) 22 or 22a and 22b may be overcharged. At the beginning of the charging, lithium may be absorbed in the first anode active material layer(s) 22 or 22a and 22b. The anode active material in the first anode active material layer(s) 22 or 22a and 22b may form an alloy or a compound with lithium ions migrated (e.g., derived) from the cathode layer 10. When the anode active material layer is charged over the charge capacity of the first anode active material layer(s) 22 or 22a and 22b, for example, lithium may be plated on a back surface of the first anode active material layer(s) 22 or 22a and 22b, which is between the anode current collector(s) 21 or 21a and 21b and the first anode active material layer(s) 22 or 22a and 22b, and a metal layer corresponding to the second anode active material layer may be formed (e.g., plated) by the plated lithium. The second anode active material layer may be a metal layer mainly formed of lithium (e.g., lithium metal). This results because, for example, the anode active material in the first anode active material layer(s) 22 or 22a and 22b is formed of a material capable of forming an alloy or a compound with lithium. In the discharging, lithium in the first anode active material layer 22 and the second anode active material layer (which is a metal layer) is ionized and migrated in a direction to the cathode layer 10. Thus, lithium may be used as an anode active material in the all-solid secondary battery 1. Also, because the first anode active material layer(s) 22 or 22a and 22b cover the second anode active material layer, the first anode active material layer(s) 22 or 22a and 22b may serve as a protection layer for the second anode active material layer, and may suppress or reduce deposition growth of lithium dendrites at the same time. Thus, short-circuit and capacity deterioration of the all-solid secondary battery 1 may be suppressed, and, as a result, cycle characteristics of the all-solid secondary battery 1 may be improved. Also, when the second anode active material layer is formed by charging after the assembling of the all-solid secondary battery 1, the anode current collector(s) 21 or 21a and 21b, the first anode active material layer(s) 22 or 22a and 22b, and a region between the anode current collector(s) 21 or 21a and 21b and the first anode active material layer(s) 22 or 22a and 22b may be, for example, Li-free regions substantially not including lithium (Li) in the initial state or a state after the discharging of the all-solid secondary battery 1.

### [Anode layer: Anode current collector]

The anode current collector(s) 21 or 21a and 21b may be formed of, for example, a material that does not react with lithium, e.g., a material that does not form an alloy or a compound of lithium. Non-limiting examples of the material to form the anode current collector(s) 21 or 21a and 21b include copper (Cu), stainless steel, titanium (Ti), iron (Fe), cobalt (Co), and nickel (Ni), but any material available as an anode current collector in the art may be used. The anode current collector(s) 21 or 21a and 21b may be formed of a single metal or an alloy or combination of at least two metals. The anode current collector(s) 21 or 21a and 21b may be, for example, in the form of a plate or a foil.

The all-solid secondary battery 1 may further include, for example, a thin film including an element that is capable of forming an alloy with lithium on the anode current collector(s) 21 or 21a and 21b. The thin film may be disposed between the anode current collector(s) 21 or 21a and 21b and the first anode active material layer(s) 22 or 22a and 22b. The thin film may, for example, include an element capable of forming an alloy with lithium. Non-limiting examples of the element capable of forming an alloy with lithium include gold, silver, zinc, tin, indium, silicon, aluminum, and bismuth, but any element capable of forming an alloy with lithium in the art may be used. The thin film may be formed of any of these metals or alloys of suitable metals. When the thin film is disposed on the anode current collector(s) 21 or 21a and 21b, for example, the second anode active material layer deposited by plating between the thin film and the first anode active material layer(s) 22 or 22a and 22b may further be planarized, and thus the cycle characteristics of the all-solid secondary battery 1 may further be improved.

A thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, the thin film may not function as described above. When the thickness of the thin film is too thick, the thin film itself absorbs lithium, and a deposition amount of lithium in an anode may decrease, resulting in deterioration of an energy density of the all-solid secondary battery 1, and thus cycle characteristics of the all-solid secondary battery 1 may be deteriorated. The thin film may be disposed on the anode current collector(s) 21 or 21a and 21b by, for example, vacuum vapor deposition, sputtering, and/or plating, but embodiments are not limited thereto, and any method capable of forming a thin film in the art may be used.

One or more embodiments will now be described in more detail with reference to the following examples. However, these examples are not intended to limit the scope of the one or more embodiments.

### Example 1: Bi-cell

### (Preparation of anode layer)

A Ni foil having a thickness of about 10 µm was used as an anode current collector. Carbon black (CB) having an average primary particle diameter of about 30 nm and silver (Ag) particles having an average particle diameter of about 60 nm were prepared as an anode active material.

4 g of a powder mixture including the CB and Ag particles at a weight ratio of about 3:1 was added to a container, and 4 g of an NMP solution including 7 wt% of a PVDF binder (#9300 available from Kureha) was added thereto to prepare a solution mixture. Then, the solution mixture was stirred while adding NMP in a small amount to prepare a slurry. The prepared slurry was coated on a Ni foil using a bar coater and dried in the air at about 80 ° C for about 10 minutes to obtain a stack. The stack thus obtained was vacuum-dried at about 40 ° C for about 10 hours. The dried stack was roll-pressed for 10 ms at a pressure of about 300 MPa to planarize a surface of a first anode active material layer of the stack. An anode layer was prepared by the above process. A thickness of the first anode active material layer in an anode layer was about 7 µm.

### (Preparation of cathode layer)

LiNi_{0.8}Co_{0.15}Mn_{0.05}O₂ (NCM) coated with Li₂O-ZrO₂ (LZO) was prepared as a cathode active material. The LZO-coated cathode active material was prepared according to the method disclosed in Korean Patent No. 10-2016-0064942, the entire content of which is incorporated herein by reference. An argyrodite-type crystalline material, Li₆PS₅Cl (D₅₀ = 0.5 µm, crystalline), was prepared as a solid electrolyte. A polytetrafluoroethylene (PTFE) binder (Teflon binder available from DuPont) was prepared as a binder. Carbon nanofibers (CNFs) were prepared as a conducting agent. The cathode active material, the solid electrolyte, the conducting agent, and the binder at a weight ratio of about 84 : 11.5 : 3 :1.5 were mixed with a xylene solvent to prepare a mixture, and the mixture was molded into the sheet form and then vacuum-dried at about 40 °C for about 8 hours to prepare a cathode sheet. A gasket of a polypropylene (PP) material was disposed around the cathode sheet to surround the cathode sheet. The cathode sheet surrounded by the gasket was pressed on each of two surfaces of the cathode current collector formed of a carbon-coated aluminum foil having a thickness of about 18 µm to prepare a cathode layer. A thickness of the cathode active material layer and the gasket in the cathode layer was about 100 µm.

The cathode active material layer was disposed in the central part of the cathode current collector, and the gasket surrounded the cathode active material layer and was disposed to distal ends of the cathode current collector. An area of the cathode active material layer was about 90% of an area (e.g., surface area) of the cathode current collector, and the gasket was disposed throughout the remaining 10% of the area of the cathode current collector, on which the cathode active material layer was not disposed.

### (Preparation of solid electrolyte layer)

1.5 parts by weight of an acryl-based binder was added to 98.5 parts by weight of the solid electrolyte, i.e., an argyrodite-type crystal material, i.e., a Li₆PS₅Cl solid electrolyte (D₅₀ = 3.0 µm, crystalline), to prepare a mixture. An octyl acetate was added to the mixture and stirred to prepare a slurry. The slurry was coated on nonwoven fabric using a bar coater and dried in the air at a temperature of about 80 °C for about 10 minutes to prepare a stack. The stack was vacuum-dried at about 80 °C for about 6 hours. A solid electrolyte layer was prepared by the above process.

### (Preparation of all-solid secondary battery)

The solid electrolyte layer was disposed on each planar surface (two surfaces) of the cathode layer, and the anode layer was disposed on each of the solid electrolyte layer such that the first anode active material contacted the solid electrolyte layer to prepare a stack. The stack was plate press treated at room temperature and a pressure of about 500 MPa for about 30 min. By this pressing, the solid electrolyte layer was sintered to improve battery characteristics. A thickness of the sintered solid electrolyte layer was about 45 µm. A density of the argyrodite-type crystal material, i.e., a Li₆PS₅Cl solid electrolyte, in the sintered solid electrolyte layer was about 1.6 g/cc. An area of the cathode active material layer was about 90% of an area (e.g., surface area) of the solid electrolyte layer. The area of the solid electrolyte layer was almost the same as each of the area of the cathode current collector and the area of the anode current collector.

The pressed stack was put into a pouch and vacuum-sealed to prepare an all-solid secondary battery. A part of the cathode current collector and a part of the anode current collector were protruded outside of the battery for use as a cathode layer terminal and an anode layer terminal, respectively.

### Example 2: Single cell

An all-solid secondary battery was prepared in substantially the same manner as in Example 1, except that a cathode active material layer and a gasket was disposed on one surface of a cathode current collector to prepare a (single) cathode layer, and a solid electrolyte layer and an anode layer were sequentially disposed on one surface of the cathode layer to prepare the battery.

### Example 3: Sn thin film introduction

An SUS sheet having a thickness of about 10 µm was prepared as an anode current collector. A tin (Sn) plating layer having a thickness of about 500 nm was formed on the SUS sheet. An all-solid secondary battery was prepared in substantially the same manner as in Example 1, except that the SUS sheet having a tin thin film formed thereon was used as the anode current collector.

### Comparative Example 1: Free of gasket

An all-solid secondary battery was prepared in substantially the same manner as in Example 1, except that a gasket was not used in the preparation of a cathode layer.

### Comparative Example 2: No first anode active material layer

An all-solid secondary battery was prepared in substantially the same manner as in Comparative Example 1, except that only a Ni anode current collection was used without forming a first anode active material layer.

### Comparative Example 3: Ni alone

An all-solid secondary battery was prepared in substantially the same manner as in Comparative Example 1, except that nickel (Ni) particles having an average particle diameter of about 100 nm was used as an anode active material instead of a 3:1 mixture including carbon black (CB) having a primary particle diameter of about 30 nm to silver (Ag) particles having an average particle diameter of about 60 nm.

### Comparative Example 4: Graphite alone

An all-solid secondary battery was prepared in substantially the same manner as in Comparative Example 1, except that scale-shaped graphite particles having an average particle diameter of about 5 µm were used as an anode active material instead of a 3:1 mixture including carbon black (CB) having a primary particle diameter of about 30 nm and silver (Ag) particles having an average particle diameter of about 60 nm.

### Evaluation Example 1: Confirmation of cracks generated after preparation of all-solid secondary battery

Cross-sections of the all-solid secondary batteries prepared in Examples 1 to 3 and Comparative Examples 1 to 4 were observed by a scanning electron microscope (SEM) to check whether cracks penetrating the solid electrolyte layer occurred or not.

In the all-solid secondary batteries prepared in Examples 1 to 3, cracks of the solid electrolyte layer were not observed.

In contrast, in the all-solid secondary batteries prepared in Comparative Examples 1 to 4, a number of cracks of the solid electrolyte layer were observed at a corner part of the cathode layer.

Therefore, in the all-solid secondary batteries prepared in Examples 1 to 3, it was confirmed that cracks of a solid electrolyte layer were prevented or reduced in a battery preparation process by using an inactive member.

### Evaluation Example 2: Charge and discharge test

Charge and discharge characteristics of the all-solid secondary batteries prepared in Examples 1 to 3 and Comparative Examples 1 to 4 were evaluated by the following charge and discharge test. The charge and discharge test was performed by putting the all-solid secondary battery in a thermostat at about 60 °C.

In the 1^{st} cycle, the battery was charged at a constant current of about 3.6 mA/cm² for about 12.5 hours until a battery voltage reached about 3.9 V to about 4.25 V. Then, the battery was discharged at a constant current of about 3.6 mA/cm² for about 12.5 hours until a battery voltage reached about 2.5 V.

In the 2^{nd} and following cycles, the charging and discharging were performed using substantially the same conditions as those of the 1^{st} cycle up to the 5^{th} cycle.

The all-solid secondary batteries of Examples 1 to 3 were normally charged and discharged up to the 5^{th} cycle.

In the all-solid secondary battery prepared in Comparative Example 1, a short circuit occurred in a charging process of the 2^{nd} cycle, such that charging was not performed after the short-circuit, and the battery voltage no longer increased.

In the all-solid secondary batteries of Comparative Examples 2 to 4, a short circuit occurred in a charging process of the 1^{st} cycle or a discharging cycle of the 1^{st} cycle.

In the all-solid secondary batteries of Examples 1 and 2, it was confirmed that a plated layer (i.e., a lithium metal layer) corresponding to the second anode active material layer was formed between the first anode active material layer and the anode current collector after the charging at the 1^{st} cycle was completed, according to the SEM images for cross sections of these batteries.

In the all-solid secondary battery of Example 3, it was confirmed that a plated layer (i.e., a lithium metal layer) corresponding to the second anode active material layer was formed between the first anode active material layer and the Sn thin film layer after the charging at the 1^{st} cycle was completed, according to the SEM image for cross section of the battery.

As described above, the all-solid secondary battery according to the present embodiment may be applied to various portable devices and vehicles.

According to an aspect of one or more embodiments, it is possible to provide an all-solid secondary battery capable of preventing or reducing a short circuit and having good cycle characteristics.

As used herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

It will be understood that the embodiments described herein should be considered in a descriptive sense only and not for purposes of limitation. Descriptions of features or aspects within each embodiment should typically be considered as being available for other similar features or aspects in other embodiments. While one or more embodiments have been described with reference to the drawings, it will be understood by those of ordinary skill in the art that various changes in form and details may be made therein without departing from the scope of the disclosure as defined by the following claims.

## Claims

1. An all-solid-state secondary battery comprising:
a cathode layer;
an anode layer; and
a solid electrolyte layer between the cathode layer and the anode layer,
wherein the cathode layer comprises:
a cathode current collector;
a cathode active material layer on the cathode current collector; and
an inactive member on at least one side surface of the cathode active material layer, and
wherein the anode layer comprises:
an anode current collector; and
a first anode active material layer on the anode current collector.

2. The battery of claim 1, wherein the inactive member surrounds one or more side surfaces of the cathode active material layer to contact the solid electrolyte layer.

3. The battery of claim 2, wherein the inactive member extends to one or more distal ends of the solid electrolyte layer.

4. The battery of claim 1, wherein an area of the cathode active material layer is smaller than an area of the solid electrolyte layer contacting the cathode active material layer, and
wherein the inactive member surrounds one or more side surfaces of the cathode active material layer to correct an area mismatch between the cathode active material layer and the solid electrolyte layer.

5. The battery of claim 1, wherein the inactive member is between the cathode current collector and the solid electrolyte layer facing each other, or
wherein the anode layer comprises a first anode layer and a second anode layer on opposite sides of the cathode,
wherein the solid electrolyte layer comprises a first solid electrolyte layer and a second solid electrolyte layer between the cathode and the first anode layer and the cathode and the second anode layer, respectively, and
wherein the inactive member is between the first solid electrolyte layer and the second solid electrolyte layer.

6. The battery of claim 1, wherein an area of the cathode active material layer is smaller than an area of the anode current collector.

7. The battery of claim 1, wherein an area of the anode current collector and an area of the cathode current collector are substantially equal, and
the area of the cathode current collector and an area of the solid electrolyte layer are substantially equal.

8. The battery of any one of the preceding claims, wherein the inactive member comprises at least one selected from a lithium ion insulator and a lithium ion conductor, or .wherein the inactive member comprises at least one selected from an insulating polymer, an ionic conductive polymer, an insulating inorganic material, an oxide-based solid electrolyte, and a sulfide-based solid electrolyte,
and/or
wherein the inactive member is a gasket.

9. The battery of any one of the preceding claims, wherein a density of the inactive member is about 10% to about 200% of a density of a cathode active material in the cathode active material layer.

10. The battery of any one of the preceding claims, wherein the solid electrolyte layer comprises a sulfide-based solid electrolyte.

11. The battery of claim 10, wherein the sulfide-based solid electrolyte is at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive number, and Z is one of Ge, Zn, or Ga), Li₂S-GeS₂, Li₂S-SiS₂-Li₃PO₄, Li₂S-SiS₂-LiₚMO_{q} (where p and q are each a positive number of greater than 0 to 10, and M is one of P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

12. The battery of claim 10, wherein the sulfide-based solid electrolyte is an argyrodite-type solid electrolyte comprising at least one selected from Li₆PS₅Cl, Li₆PS₅Br, and Li₆PS₅I.

13. The battery of claim 12, wherein a density of the argyrodite-type solid electrolyte is about 1.5 g/cc to about 2.0 g/cc.

14. The battery of any one of the preceding claims, wherein the first anode active material layer comprises an anode active material and a binder,
wherein the anode active material is in the form of particles, and
wherein an average particle diameter of the anode active material is about 4 µm or less.

15. The battery of claim 14, wherein the anode active material comprises at least one selected from a carbonaceous anode active material and a metal or metalloid anode active material, and
wherein the carbonaceous anode active material comprises an amorphous carbon.

16. The battery of claim 15, wherein the metal or metalloid anode active material comprises at least one selected from the group consisting of gold (Au), platinum (Pt), palladium (Pd), silicon (Si), silver (Ag), aluminum (Al), bismuth (Bi), tin (Sn), and zinc (Zn).

17. The battery of claim 14, wherein the anode active material comprises a mixture comprising:
first particles formed of amorphous carbon; and
second particles formed of a metal or metalloid, and
wherein an amount of the second particles is about 8 weight% (wt%) to about 60 wt% based on the total weight of the mixture.

18. The battery of any one of the preceding claims, further comprising a second anode active material layer between the anode current collector and the first anode active material layer and/or between the solid electrolyte layer and the first anode active material layer,
wherein the second anode active material layer is a plated layer or a metal layer comprising lithium or a lithium alloy.
